# EUROPEAN PATENT SPECIFICATION

(11) **EP 4 411 320 B1**
(45) Date of publication and mention of the grant of the patent: **01.07.2026**
(21) Application number: 23210548.6
(22) Date of filing: 17.11.2023
(51) Int. Cl.: G01C 21/34

(54) **REFERENCE TRAJECTORY GENERATING DEVICE, METHOD, AND COMPUTER PROGRAM FOR GENERATING REFERENCE TRAJECTORY**
VORRICHTUNG ZUR ERZEUGUNG EINER REFERENZTRAJEKTORIE, VERFAHREN UND COMPUTERPROGRAMM ZUR ERZEUGUNG EINER REFERENZTRAJEKTORIE
DISPOSITIF DE GÉNÉRATION DE TRAJECTOIRE DE RÉFÉRENCE, PROCÉDÉ ET PROGRAMME INFORMATIQUE POUR GÉNÉRER UNE TRAJECTOIRE DE RÉFÉRENCE

(30) Priority: 01.02.2023 JP 2023013888
(43) Date of publication of application: 07.08.2024
(73) Proprietor: Woven by Toyota, Inc., Tokyo 103-0022 (JP)
(72) Inventor: TANAKA, Masahiro, Tokyo, 103-0022 (JP)
(74) Representative: TBK

(56) References cited:
- EP-A1- 3 293 489
- WO-A2-2020/112827
- US-A1- 2020 124 438
- US-A1- 2020 406 893
- US-A1- 2021 180 987
- STEFAN SCHROEDL ET AL: "Mining GPS Traces for Map Refinement", DATA MINING AND KNOWLEDGE DISCOVERY, KLUWER ACADEMIC PUBLISHERS, BO, vol. 9, no. 1, 1 July 2004 (2004-07-01), pages 59 - 87, XP019277108, ISSN: 1573-756X

## Description

### FIELD

The present invention relates to a reference trajectory generating device, a method, and a computer program for generating a reference trajectory serving as a reference in a road section.

### BACKGROUND

A technique has been proposed to generate data representing an area travelable by vehicles for each road section as a piece of information included in a high-precision map to which an autonomous driving system of a vehicle refers for autonomous driving control of the vehicle (see Japanese Unexamined Patent Publication JP2020-101745A).

A map data generating device disclosed in JP2020-101745A statistically processes data of straddling trajectories from a start section of a first lane to an end section of a second lane. The map data generating device excludes data of straddling trajectories deviating from a predetermined area, and then generates travelable area data representing an area where a vehicle can actually travel using an autonomous driving function or a driver assisting function. In STEFAN SCHROEDL ET AL: "Mining GPS Traces for Map Refinement", DATA MINING AND KNOWLEDGE DISCOVERY, KLUWER ACADEMIC PUBLISHERS, BO, vol. 9, no. 1, 1 July 2004 (2004-07-01), pages 59-87, ISSN: 1573-756X, an approach consisting of successive processing steps is disclosed: individual vehicle trajectories are divided into road segments and intersections; a road centerline is derived for each segment; lane positions are determined by clustering the perpendicular offsets from it; and the transitions of traces between segments are utilized in the generation of intersection models.

### SUMMARY

The trajectory of actual travel of a vehicle is affected by the circumstances of the vehicle, and may thus be an unnatural trajectory that is not drawn by a vehicle traveling normally, in some cases. The use of such an unnatural trajectory for generating a trajectory serving as a reference may produce an inappropriate reference trajectory.

It is an object of the present invention to provide a reference trajectory generating device that can generate a trajectory serving as a reference in a predetermined section of a road appropriately.

According to an embodiment, a reference trajectory generating device is provided as specified in the appended claims.

According to another embodiment, a method for generating a reference trajectory is provided as specified in the appended claims.

According to still another embodiment, a computer program for generating a reference trajectory is provided as specified in the appended claims.

The reference trajectory generating device according to the present disclosure has an advantageous effect of being able to generate a trajectory serving as a reference in a predetermined section of a road appropriately.

### BRIEF DESCRIPTION OF DRAWINGS

FIG. 1 schematically illustrates the configuration of a map generation system equipped with a reference trajectory generating device.
FIG. 2 illustrates the hardware configuration of a server, which is an example of the reference trajectory generating device.
FIG. 3 is a functional block diagram of a processor, related to a reference trajectory generation process.
FIG. 4 illustrates an example of trajectories used for generating a reference trajectory.
FIG. 5 illustrates another example of trajectories used for generating a reference trajectory.
FIG. 6 is an operation flowchart of the reference trajectory generation process.

### DESCRIPTION OF EMBODIMENTS

A reference trajectory generating device, a method for generating a reference trajectory executed by the reference trajectory generating device, and a computer program for generating a reference trajectory will now be described with reference to the attached drawings. Regarding a predetermined section of a road, such as a curve, an intersection, or a fork, the reference trajectory generating device generates a trajectory serving as a reference to which an autonomous driving system or a driver assisting system of a vehicle traveling through the section can refer. In the following, a trajectory serving as a reference will be referred to simply as a "reference trajectory." The reference trajectory generating device collects information representing trajectories of actual travel through a predetermined section of a road from one or more vehicles that have traveled through the section. The reference trajectory generating device classifies collected individual trajectories in the predetermined section into classes by clustering of the individual trajectories, selects a class including the most trajectories of the classes, and generates a reference trajectory in the predetermined section by averaging individual trajectories included in the selected class.

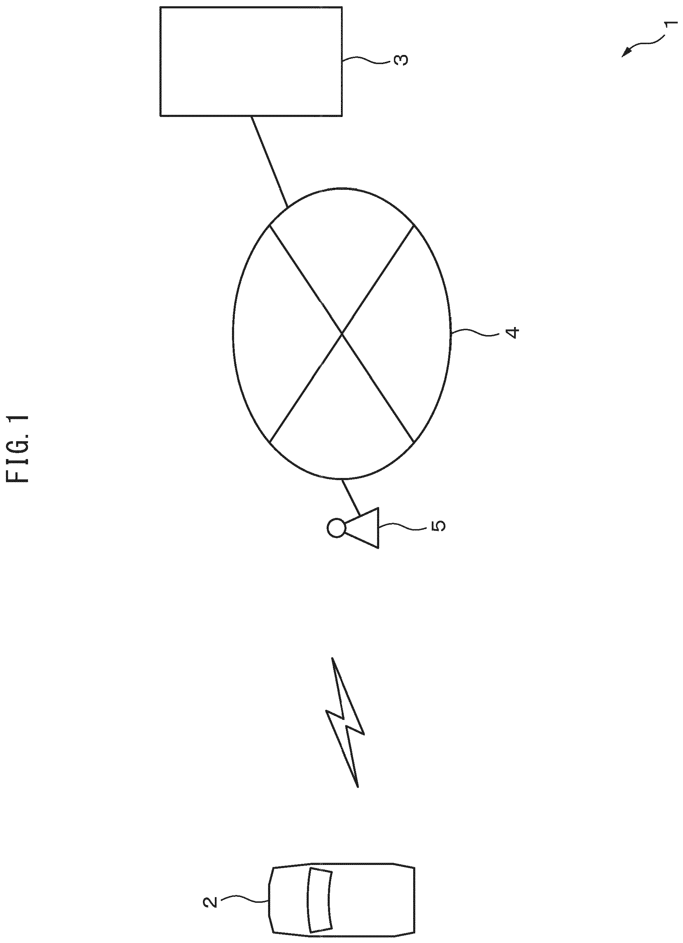

FIG. 1 schematically illustrates the configuration of a map generation system equipped with the reference trajectory generating device. In the present embodiment, the map generation system 1 includes at least one vehicle 2 and a server 3, which is an example of the reference trajectory generating device. Each vehicle 2 accesses a wireless base station 5, which is connected, for example, via a gateway (not illustrated) to a communication network 4 connected with the server 3, thereby connecting to the server 3 via the wireless base station 5 and the communication network 4. For simplicity, FIG. 1 illustrates only a single vehicle 2, but the map generation system 1 may include multiple vehicles 2. FIG. 1 also illustrates only a single wireless base station 5, but the communication network 4 may be connected with multiple wireless base stations 5.

The vehicle 2 includes a GPS receiver, an acceleration sensor, a trajectory recorder, and a wireless communication terminal. The GPS receiver receives GPS signals from GPS satellites at predetermined intervals, and determines the position of the vehicle 2, based on the received GPS signals. The GPS receiver outputs positioning information indicating the result of determination of the position of the vehicle 2 based on the GPS signals to the trajectory recorder via an in-vehicle network at predetermined intervals. Instead of the GPS receiver, the vehicle 2 may include a receiver conforming to another satellite positioning system. In this case, the receiver determines the position of the vehicle 2.

The acceleration sensor measures acceleration in a predetermined direction applied to the vehicle 2 (e.g., the travel direction or the lateral direction of the vehicle 2), and outputs information indicating the measured acceleration to the trajectory recorder at predetermined intervals.

The trajectory recorder includes, for example, a processor and a memory. The processor of the trajectory recorder generates trajectory information, which represents a trajectory of travel of the vehicle 2, by arranging the positions of the vehicle 2 indicated by positioning information obtained from the GPS receiver in chronological order, and stores the generated trajectory information in the memory of the trajectory recorder. In the case where information indicating a predetermined section that is a target region for collecting trajectories is received in advance from the server 3 via the wireless communication terminal, the trajectory recorder may include, in the trajectory information, only the positions of the vehicle 2 in the predetermined section and in front of and behind the predetermined section among the measured positions of the vehicle 2. In this case, the trajectory recorder may further include identifying information of the predetermined section that is a target region for collection, in the trajectory information. The trajectory recorder may include identifying information of the vehicle 2 in the trajectory information. Every time positioning information is received, the trajectory recorder may further include, in the trajectory information, that acceleration in the predetermined direction applied to the vehicle 2 which is measured by the acceleration sensor at the timing closest to the time of reception of the positioning information, in association with the position of the vehicle 2 indicated by the positioning information. In the trajectory information, the trajectory recorder may further include the speed of the vehicle 2 traveling through the predetermined section (e.g., an average speed over the whole predetermined section or the speed at the time of passing a predetermined point in the predetermined section, such as one of the ends or the midpoint). In the trajectory information, the trajectory recorder may further include information indicating the times at which the vehicle 2 passed individual positions on the trajectory.

The vehicle 2 may include a camera for taking a picture of a region around the vehicle 2. The camera may generate an image representing the region around the vehicle 2 at predetermined intervals, and output the generated image to the trajectory recorder via the in-vehicle network. In this case, every time an image is received from the camera, the processor of the trajectory recorder detects features on or around a road being traveled by the vehicle 2 from the image. The processor of the trajectory recorder further obtains odometry information of the vehicle 2 from an electronic control unit (not illustrated) that controls travel of the vehicle 2, and determines the amount of travel and the change in orientation of the vehicle 2 in each interval of generation of images. The processor of the trajectory recorder may then estimate the positions of the vehicle 2 at the times of generation of respective images, based on the features detected from the images as well as the amount of travel and the change in orientation of the vehicle 2 in each interval of generation of images, in accordance with the technique of "Structure from Motion (SfM)." The processor of the trajectory recorder may then generate trajectory information by arranging the positions of the vehicle 2 at the times of generation of respective images in chronological order.

At a predetermined timing, the trajectory recorder outputs the generated trajectory information to the wireless communication terminal. The predetermined timing may be, for example, the timing when the ignition switch of the vehicle 2 is turned off, or timings at certain intervals (e.g., 30 minutes to 1 hour) after the ignition switch of the vehicle 2 is turned on. Alternatively, collection region information indicating a target region for collecting trajectories may be notified in advance to the vehicle 2 by the server 3 via the communication network 4 and the wireless base station 5. In this case, the trajectory recorder may determine the timing when the vehicle 2 moves outside the target region for collection as the predetermined timing, by referring to the collection region information and the positioning information.

The wireless communication terminal is a device to execute a wireless communication process conforming to a predetermined standard of wireless communication, and accesses, for example, the wireless base station 5 to connect to the server 3 via the wireless base station 5 and the communication network 4. The wireless communication terminal generates an uplink radio signal including trajectory information received from the trajectory recorder, and transmits the uplink radio signal to the wireless base station 5 to transmit the trajectory information to the server 3. Further, the wireless communication terminal receives a downlink radio signal from the wireless base station 5, and passes collection region information from the server 3 included in the radio signal to the trajectory recorder.

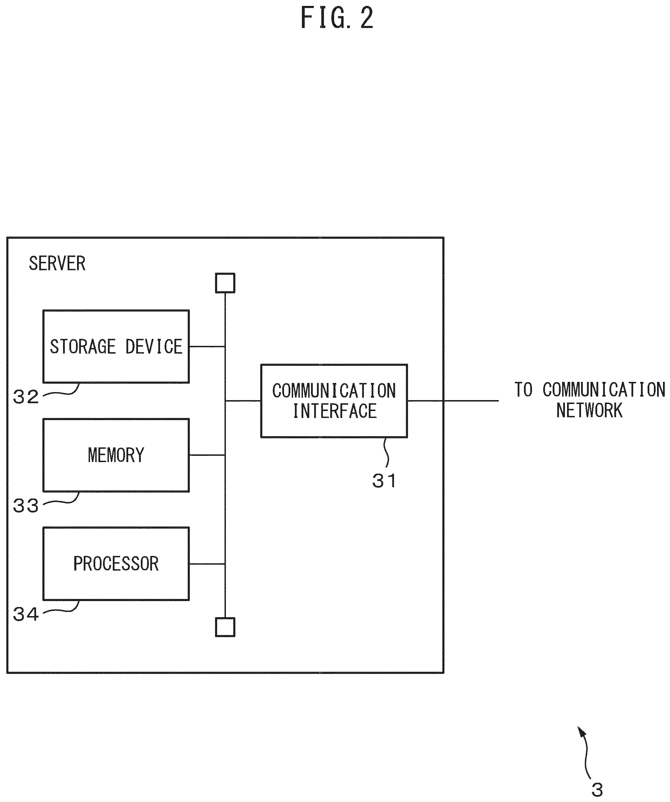

The following describes the server 3, which is an example of the reference trajectory generating device. FIG. 2 illustrates the hardware configuration of the server 3. The server 3 includes a communication interface 31, a storage device 32, a memory 33, and a processor 34. The communication interface 31, the storage device 32, and the memory 33 are connected to the processor 34 via a signal line. The server 3 may further include an input device, such as a keyboard and a mouse, and a display device, such as a liquid crystal display.

The communication interface 31, which is an example of a communication unit, includes an interface circuit for connecting the server 3 to the communication network 4. The communication interface 31 is configured to be communicable with the vehicle 2 via the communication network 4 and the wireless base station 5. More specifically, the communication interface 31 passes to the processor 34 trajectory information received from the vehicle 2 via the wireless base station 5 and the communication network 4. Further, the communication interface 31 transmits collection region information received from the processor 34 to the vehicle 2 via the communication network 4 and the wireless base station 5.

The storage device 32, which is an example of a storage unit, includes, for example, a hard disk drive, or an optical medium and an access device therefor, and stores various types of data and information used in a reference trajectory generation process. For example, the storage device 32 stores a map to which information representing a reference trajectory is to be added. The map is an example of the map information including information indicating road structure in the predetermined section, and includes information indicating the position of a predetermined section of a road for which information representing a reference trajectory is to be added and information indicating the structure of the road. As the information indicating the position of the predetermined section, the map includes, for example, the center positions in the width direction of the road at one end and the other end of the predetermined section. When the road in the predetermined section includes multiple lanes, the map includes, for each lane, the center positions in the width direction of the lane at one end and the other end of the predetermined section. The map may further include information indicating road edges, the width of the road or lane, the center line, and the width direction of the predetermined section. As the information indicating the structure of the predetermined section, the map may further include information indicating the curvature of the road or lanes in the predetermined section and the type of road structure (e.g., a curve, an intersection, or a fork). The map may further include information for identifying the predetermined section, such as a link ID. The storage device 32 further stores trajectory information received from each vehicle 2. The storage device 32 may further store a computer program for the processor 34 to execute the reference trajectory generation process.

The memory 33, which is another example of a storage unit, includes, for example, nonvolatile and volatile semiconductor memories. The memory 33 temporarily stores various types of data generated during execution of the reference trajectory generation process.

The processor 34 includes one or more central processing units (CPUs) and a peripheral circuit thereof, and may further include another operating circuit, such as a logic-arithmetic unit or an arithmetic unit. Every time trajectory information is received from one of the vehicles 2, the processor 34 stores the received trajectory information in the storage device 32. In addition, the processor 34 executes the reference trajectory generation process.

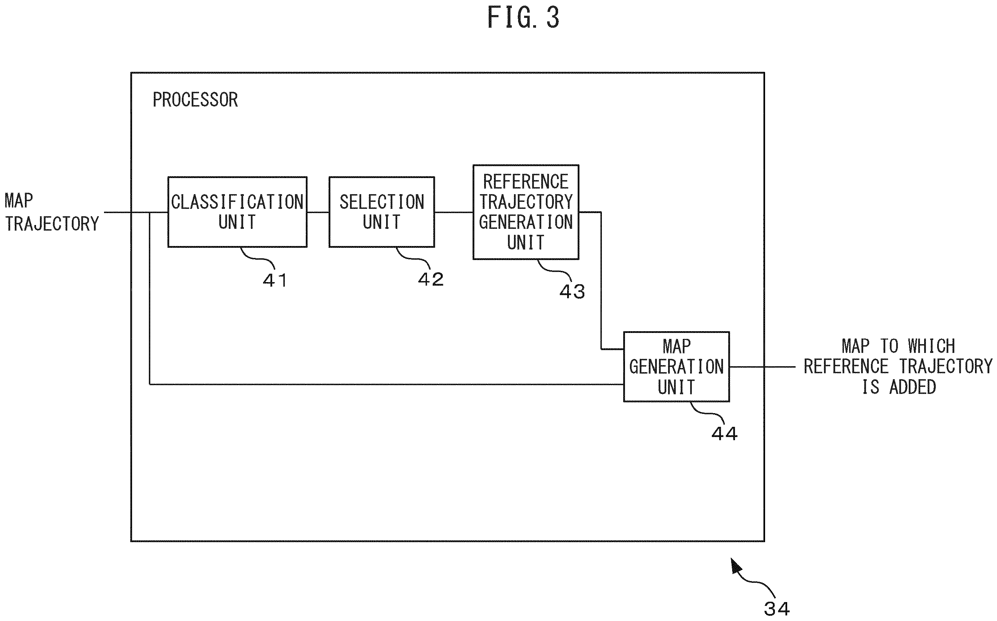

FIG. 3 is a functional block diagram of the processor 34, related to the reference trajectory generation process. The processor 34 includes a classification unit 41, a selection unit 42, a reference trajectory generation unit 43, and a map generation unit 44. These units included in the processor 34 are functional modules, for example, implemented by a computer program executed by the processor 34, or may be dedicated operating circuits provided in the processor 34.

The classification unit 41 classifies trajectories of travel through a predetermined section of a road for which a reference trajectory is to be generated into a plurality of classes by clustering of the trajectories in the predetermined section. The trajectories may be those of a single vehicle 2 or multiple vehicles 2.

The predetermined section of a road may be a section in which the vehicle 2 traveling therethrough is required to take action other than going straight, e.g., a curved section of a particular road, such as an expressway, an intersection, or a section including a fork. However, the predetermined section is not limited to one of these sections, and may be any road section for which generation of a reference trajectory is required.

The classification unit 41 selects pieces of trajectory information of trajectories passing through a predetermined section of a road for which a reference trajectory is to be generated, from pieces of trajectory information collected from each vehicle 2 and stored in the storage device 32. To achieve this, the classification unit 41 compares a set of positions passed by the vehicle 2 included in an individual piece of trajectory information with the position of the predetermined section. From the pieces of trajectory information, the classification unit 41 selects one such that the set of positions passed by the vehicle extends from one end to the other end of the predetermined section, as one representing a trajectory of travel of the vehicle 2 through the predetermined section. More specifically, the classification unit 41 selects a piece of trajectory information such that the direction of an array of the positions of the vehicle representing a trajectory crosses the width direction of the lane or road at one end and the other end of the predetermined section, as one representing a trajectory of travel of the vehicle 2 through the predetermined section. When trajectories are collected with a predetermined section being specified, the classification unit 41 may select a piece of trajectory information including identifying information of the predetermined section, as one representing a trajectory of travel of the vehicle 2 through the predetermined section.

When the predetermined section of a road includes multiple lanes, the classification unit 41 selects, for each lane, trajectories passing through the lane in the predetermined section. For example, when the predetermined section is an intersection, the classification unit 41 sets a combination of one of lanes of a road serving as an entrance of the intersection and one of lanes of a road serving as an exit of the intersection, and selects trajectories passing through the lanes of the combination. In this case, the classification unit 41 selects a piece of trajectory information such that the set of positions representing a trajectory crosses one end and the other end of the predetermined section at positions on the one end and the other end within a half of the width of a lane of interest of the center position of the lane, as one representing a trajectory of travel of the vehicle 2 through the lane of interest.

The classification unit 41 may exclude a trajectory of which the absolute value of acceleration applied to the vehicle 2 at a position in the predetermined section exceeds a predetermined threshold among the trajectories represented by the selected pieces of trajectory information, from the trajectories to be classified. In other words, the classification unit 41 classifies trajectories of which the absolute value of the acceleration is not greater than the predetermined threshold in the predetermined section into the classes. In the case where the absolute value of the acceleration exceeds the predetermined threshold during travel through the predetermined section, the vehicle 2 may have taken an abnormal action, such as an avoidance action for avoiding a collision. By excluding such a trajectory, the server 3 can generate a more appropriate reference trajectory.

In addition, the classification unit 41 may exclude a trajectory that is against traffic laws among the trajectories represented by the selected pieces of trajectory information, from the trajectories to be classified. For example, when in the predetermined section a position included in the set of positions of the vehicle 2 representing a trajectory is included in a prohibited area into which entry is prohibited in the travel direction of the vehicle 2, such as an opposite lane, the classification unit 41 may exclude the trajectory from the trajectories to be classified. In other words, the classification unit 41 classifies trajectories that do not pass a prohibited area in the predetermined section into the classes. By excluding such a trajectory that is against traffic laws from the trajectories to be classified, the server 3 can generate a more appropriate reference trajectory. To determine whether to exclude a trajectory of interest, the classification unit 41 identifies a prohibited area by referring to the map, and determines whether an individual position of the trajectory of interest is included in the identified prohibited area. When trajectory information includes information indicating the speed of the vehicle 2, the classification unit 41 may exclude a trajectory represented by a piece of trajectory information of which the speed of the vehicle 2 exceeds the legally permitted speed or the regulation speed of the predetermined section in the predetermined section, from the trajectories to be classified.

The classification unit 41 executes a clustering process on trajectories respectively represented by the pieces of trajectory information to be classified, in accordance with a predetermined clustering technique, to classify these trajectories into classes. As the predetermined clustering technique, the classification unit 41 can use, for example, a non-hierarchical clustering technique, such as k-means clustering, or a hierarchical clustering technique, such as Ward's method or the group average method. Alternatively, the classification unit 41 may use a "Deep Neural Network (DNN)"-based clustering technique as the predetermined clustering technique.

Before executing the clustering process, the classification unit 41 may normalize the trajectories to be classified so that similar trajectories are likely to be included in the same class. For example, the classification unit 41 divides the predetermined section of a road into multiple subsections along the lengthwise direction of the road. More specifically, the classification unit 41 sets the subsections so that the boundary between two adjacent subsections is perpendicular to the lengthwise direction of the road. When the predetermined section includes a fork, a merge point, or an intersection, the classification unit 41 determines the direction along a reference line connecting the center position in the width direction of the road or lane at one end of the predetermined section and the center position in the width direction of the road or lane at the other end of the predetermined section, as the lengthwise direction of the road. The classification unit 41 then divides the predetermined section into multiple subsections along the lengthwise direction. Regarding a trajectory of interest, the classification unit 41 selects, for each subsection, a position in the subsection from the set of positions of the vehicle 2 representing the trajectory, and determines the set of the selected positions as a trajectory obtained by normalizing the trajectory of interest. For each subsection, the classification unit 41 may further calculate the distance from the center line of the road (in the case where clustering is executed on a lane by lane basis, the center line of the lane) in the subsection to the selected position. The classification unit 41 may then determine the set of distances from the center line of the road or lane to the selected positions on the trajectory in the respective subsections as a trajectory obtained by normalizing the trajectory of interest. Further, the classification unit 41 may calculate the length of the trajectory over the whole predetermined section, and include the calculated length in information representing the normalized trajectory. To this end, the classification unit 41 calculates the sum of the lengths of line segments each connecting adjacent positions in the predetermined section in the set of positions of the vehicle 2 representing the trajectory as the length of the trajectory over the whole predetermined section. The classification unit 41 normalizes the individual trajectories to be classified by executing a similar normalization process on each trajectory.

For each class, the classification unit 41 passes information representing trajectories included in the class to the selection unit 42 and the reference trajectory generation unit 43.

For each of the classes into which the trajectories are classified by the classification unit 41, the selection unit 42 counts the number of trajectories included in the class. The selection unit 42 then selects a class including the most trajectories from the classes, and notifies information indicating the selected class to the reference trajectory generation unit 43.

The reference trajectory generation unit 43 generates a reference trajectory by averaging individual trajectories included in the class selected by the selection unit 42. To average individual trajectories, the reference trajectory generation unit 43 divides, for example, the predetermined section of a road into multiple subsections along the lengthwise direction of the road, similarly to the classification unit 41. For each subsection, the reference trajectory generation unit 43 further selects positions on the trajectories included in the selected class in the subsection. For each subsection, the reference trajectory generation unit 43 then calculates an average position of the selected positions on the respective trajectories in the subsection as a reference position. The reference trajectory generation unit 43 then calculates a curve approximating the reference positions in the respective subsections as a reference trajectory. To this end, the reference trajectory generation unit 43 calculates a reference trajectory, for example, in accordance with the least-squares method so as to minimize the sum of squares of the distances between the reference positions in the respective subsections and the reference trajectory. The reference trajectory generation unit 43 may assume a curve expressed by a predetermined equation when determining a curve approximating the reference positions in the respective subsections. As such a curve, the reference trajectory generation unit 43 may use, for example, a clothoid curve whose curvature decreases with the distance to an end of the predetermined section.

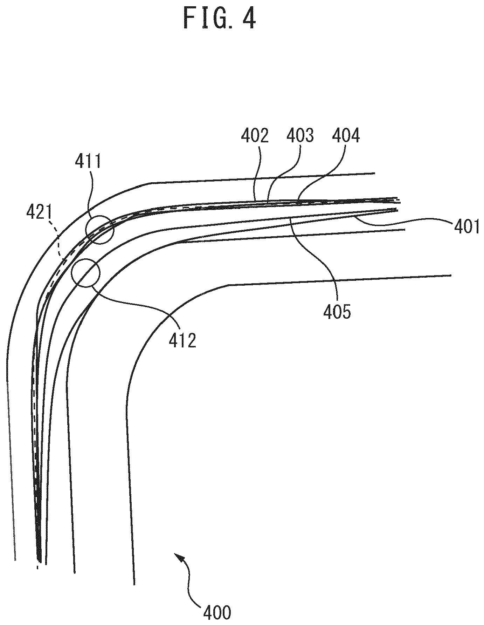

FIG. 4 illustrates an example of trajectories used for generating a reference trajectory. A predetermined section 400 in the example illustrated in FIG. 4 is a curved section. In this example, five trajectories 401 to 405 are collected regarding the predetermined section 400. Of these, the trajectory 401, along which a vehicle temporarily enters the opposite lane, is against traffic laws. Hence the trajectory 401 is excluded from targets to be classified by the classification unit 41. The clustering process is executed on the trajectories 402 to 405. As a result, the three trajectories 402 to 404 are classified as the same class 411 whereas the trajectory 405 is classified as another class 412. Comparing the classes 411 and 412, the class 411 includes more trajectories than the class 412. Hence the trajectories 402 to 404 included in the class 411 are averaged to generate a reference trajectory 421.

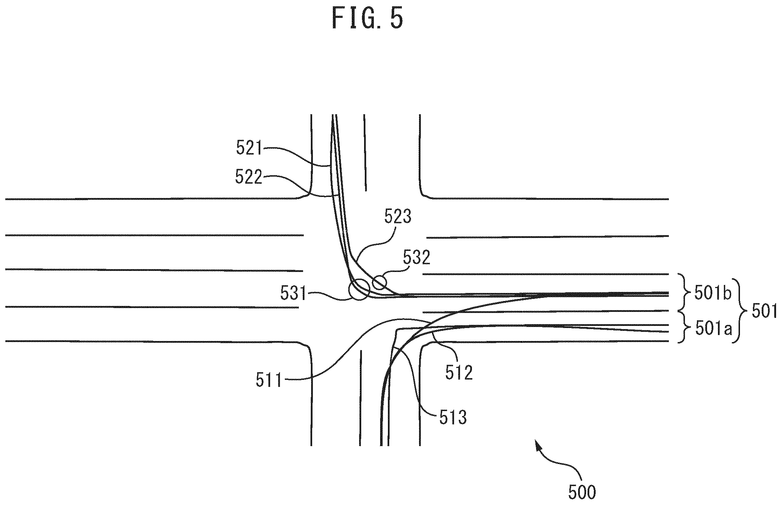

FIG. 5 illustrates another example of trajectories used for generating a reference trajectory. A predetermined section 500 in the example illustrated in FIG. 5 is an intersection section. In this example, a road 501 connecting to the intersection includes two lanes 501a and 501b from which a vehicle can enter the intersection. The lane 501a is a left-turn lane, whereas the lane 501b is a right-turn lane. A route to turn left from the road 501 differs from a route to turn right from the road 501. Thus, reference trajectories are generated separately for a route to turn left from the lane 501a of the road 501 and a route to turn right from the lane 501b of the road 501.

Regarding the route to turn left, three trajectories 511 to 513 are illustrated. Of these, the trajectory 511, which is a route to turn left from the right lane 501b to the left road, is against traffic laws. Hence the trajectory 511 is excluded from targets to be classified by the classification unit 41. The clustering process is executed on the trajectories 512 and 513, and based on the result of the clustering process, a reference trajectory is generated. Similarly, regarding the route to turn right, three trajectories 521 to 523 are illustrated, and the clustering process is executed on these trajectories. As a result, the two trajectories 521 and 522 are classified as the same class 531 whereas the trajectory 523 is classified as another class 532. Comparing the classes 531 and 532, the class 531 includes more trajectories than the class 532. Hence the trajectories 521 and 522 included in the class 531 are averaged to generate a reference trajectory.

The reference trajectory generation unit 43 outputs information representing the generated reference trajectory (e.g., positions on the reference trajectory in the respective subsections or an approximate curve representing the reference trajectory) to the map generation unit 44.

The map generation unit 44 generates a map including information representing the reference trajectory in the predetermined section. More specifically, the map generation unit 44 adds the information representing the reference trajectory generated by the reference trajectory generation unit 43 to the predetermined section represented in the map read from the storage device 32. In this way, a map including a reference trajectory is generated.

The map generation unit 44 stores the generated map in the storage device 32. Alternatively, the map generation unit 44 may output the generated map to another device via the communication interface 31.

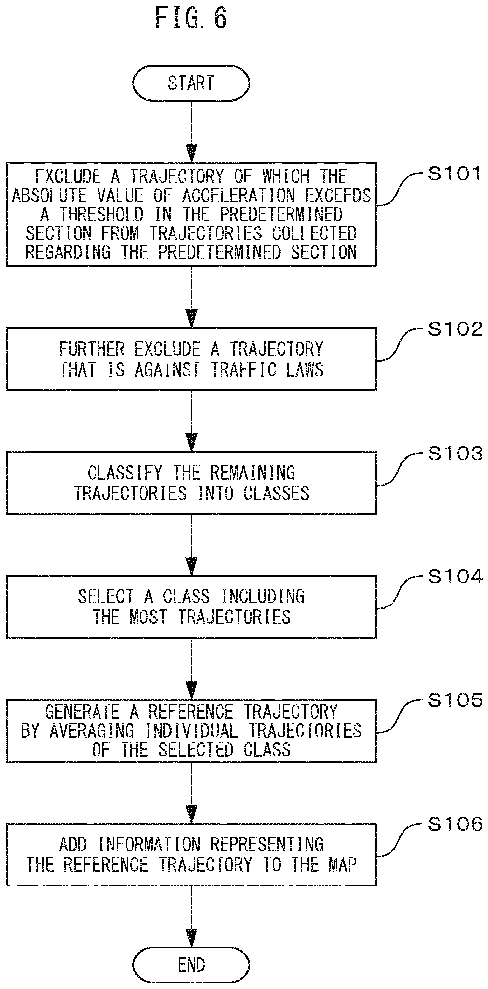

FIG. 6 is an operation flowchart of the reference trajectory generation process executed by the server 3. When at least a predetermined number of trajectories are collected regarding a predetermined section, the processor 34 of the server 3 executes the reference trajectory generation process in accordance with the operation flowchart described below.

The classification unit 41 of the processor 34 excludes a trajectory of which the absolute value of acceleration applied to the vehicle 2 at a position in the predetermined section exceeds a predetermined threshold from trajectories respectively represented by pieces of trajectory information of the predetermined section collected from each vehicle 2 (step S101). From these trajectories, the classification unit 41 further excludes a trajectory that is against traffic laws (step S102). The classification unit 41 classifies the remaining trajectories into classes by clustering of these trajectories (step S103).

For each of the classes into which the trajectories are classified by the classification unit 41, the selection unit 42 of the processor 34 counts the number of trajectories included in the class. The selection unit 42 then selects a class including the most trajectories from the classes (step S104).

The reference trajectory generation unit 43 of the processor 34 generates a reference trajectory by averaging individual trajectories of the selected class including the most trajectories (step S105). The map generation unit 44 of the processor 34 adds information representing the reference trajectory to the map (step S106). The processor 34 then terminates the reference trajectory generation process.

As described above, the reference trajectory generating device classifies, into classes, those trajectories of actual travel of one or more vehicles through a predetermined section of a road which are collected from these vehicles. The reference trajectory generating device selects a class including the most trajectories of the classes, and generates a reference trajectory serving as a reference in the predetermined section by averaging individual trajectories included in the selected class. In this way, the reference trajectory generating device can exclude a trajectory of abnormal travel of a vehicle to generate a reference trajectory. Thus, the reference trajectory generating device can generate a reference trajectory appropriately that may be suitable for travel of a vehicle.

It is assumed that the trajectory of an ordinary passenger car differs from that of a large-size vehicle, and that most of collected trajectories are of ordinary passenger cars. According to a modified example, the reference trajectory generation unit 43 may thus correct the generated reference trajectory to one for a large-size vehicle to generate a reference trajectory for a large-size vehicle. For example, a large-size vehicle cannot turn within a turning radius as small as an ordinary passenger car. Thus, when the predetermined section is a section in which the orientations of traveling vehicles change, such as a section including a right or left turn at an intersection, the reference trajectory generation unit 43 may correct the generated reference trajectory so as to increase the radius of curvature of the reference trajectory by a predetermined amount. In addition, the reference trajectory generation unit 43 may shift positions through which the corrected reference trajectory passes by a predetermined amount opposite to the turning direction of vehicles with respect to the positions of the original reference trajectory. The map generation unit 44 may add not only the original reference trajectory, but also the corrected reference trajectory to the map.

According to this modified example, the reference trajectory generation unit 43 can generate a reference trajectory for a large-size vehicle appropriately.

According to another modified example, the classification unit 41 may use, in the clustering, data depending on the road structure in the predetermined section as data representing each trajectory. Further, the selection unit 42 may change the method for selecting a class used for generating a reference trajectory, depending on the road structure in the predetermined section. In this case, the classification unit 41 and the selection unit 42 refer to information indicating the road structure included in the map to select data used for clustering or an applied method for selecting a class, depending on the road structure.

For example, when the predetermined section is a curved section, the classification unit 41 determines, for each of the trajectories in the predetermined section, a set of distances from the center line of the road or lane to the trajectory in respective subsections into which the predetermined section is divided, by referring to the map. Alternatively, for each of the trajectories, the classification unit 41 may determine a set of distances from a road edge to the trajectory in the respective subsections. For each of the trajectories, the classification unit 41 determines the set of distances and the speed of the vehicle 2 at which the predetermined section is traveled, as data used for clustering. Further, the selection unit 42 selects a class including the most trajectories, as in the embodiment.

When the predetermined section is a curved section, the reference trajectory generation unit 43 may generate a reference trajectory, based on trajectories, only when the curvature of the curved section is greater than a predetermined curvature threshold. When the curvature of the curved section is not greater than the curvature threshold, the reference trajectory generation unit 43 may determine the center line of the road or each lane in the curved section as a reference trajectory.

When the predetermined section of a road is a section which includes a fork, a merge point, or a climbing lane and in which the number of lanes changes, the classification unit 41 determines, for each trajectory, the distances from a road edge to the trajectory in respective subsections into which the predetermined section is divided. For each of the trajectories, the classification unit 41 determines the set of these distances as data used for clustering. In addition, the classification unit 41 classifies the trajectories in the predetermined section into sets each corresponding to a combination of an entrance lane and an exit lane of the predetermined section and each including trajectories passing through the corresponding lanes, and executes clustering on each set of classified trajectories. When the predetermined section includes a merge point, the selection unit 42 may determine, for each class, an average of points at which the trajectories included in the class enter a merged lane from a merging lane that ends at the merge point, and select a class whose average point is closest to the merge point.

When the predetermined section of a road includes an intersection, the classification unit 41 determines, for each of the trajectories, a set of positions on the trajectory in respective subsections into which the predetermined section is divided. For each of the trajectories, the classification unit 41 determines the set of positions as data used for clustering. For each trajectory, the classification unit 41 may further include the position where the vehicle 2 stops last time before passing through the predetermined section, in the data used for clustering. In this case, the classification unit 41 identifies a point at which the position of the vehicle 2 does not change more than a predetermined period as the position where the vehicle 2 stops, by referring to the time of each position of the vehicle 2 included in trajectory information. In addition, the classification unit 41 classifies the trajectories in the predetermined section into sets each corresponding to a combination of an entrance lane and an exit lane of the predetermined section and each including trajectories passing through the corresponding lanes, and executes clustering on each set of classified trajectories. Further, the classification unit 41 may exclude a trajectory that may cause an accident, such as a left turn with a large turning radius and a right turn with a small turning radius, from the trajectories to be classified. In this case, the classification unit 41 determines a circular arc that connects the center positions of an entrance lane and an exit lane of the predetermined section and that is convex with respect to the center of the intersection as a reference line, and excludes a trajectory deviating from the reference line more than a predetermined distance.

The computer program for causing a computer to achieve the functions of the units included in the processor of the reference trajectory generating device according to the embodiment or modified examples may be provided in a form recorded on a computer-readable storage medium. The computer-readable storage medium may be, for example, a magnetic medium, an optical medium, or a semiconductor memory.

As described above, those skilled in the art may make various modifications according to embodiments within the scope of the present invention as specified by the appended claims.

## Claims

1. A reference trajectory generating device (3) comprising:
a classification unit (41) that classifies a plurality of trajectories of travel of at least one vehicle through a predetermined section of a road into a plurality of classes by clustering of the trajectories in the predetermined section;
a selection unit (42) that selects a class from the classes, which includes the most trajectories; and
a reference trajectory generation unit (43) that generates a reference trajectory serving as a reference in the predetermined section by averaging individual trajectories included in the class selected from the classes,
**characterized in that**
among the plurality of trajectories, the classification unit (41) classifies, into the classes, trajectories that do not pass a prohibited area into which entry of the at least one vehicle is prohibited.

2. The reference trajectory generating device (3) of claim 1, further comprising
each of the plurality of trajectories includes information indicating acceleration applied to the vehicle on the trajectory, and among the plurality of trajectories, the classification unit (41) classifies trajectories of which the absolute value of the acceleration is not greater than a predetermined threshold into the classes.

3. The reference trajectory generating device according to claim 1 or 2, further comprising a storage unit (32) that stores map information including information indicating road structure in the predetermined section, wherein
in the clustering, the classification unit (41) uses data depending on the road structure in the predetermined section represented in the map information as data representing each of the plurality of trajectories.

4. A method for generating a reference trajectory, comprising:
classifying (S103) a plurality of trajectories of travel of at least one vehicle through a predetermined section of a road into a plurality of classes by clustering of the trajectories in the predetermined section;
selecting (S104) a class from the classes, which includes the most trajectories; and
generating (S105) a reference trajectory serving as a reference in the predetermined section by averaging individual trajectories included in the class selected from the classes,
**characterized in that**
among the plurality of trajectories, the classification unit (41) classifies, into the classes, trajectories that do not pass a prohibited area into which entry of the at least one vehicle is prohibited.

5. The method for generating a reference trajectory of claim 4, further comprising that
each of the plurality of trajectories includes information indicating acceleration applied to the vehicle on the trajectory, and among the plurality of trajectories, the classification unit (41) classifies trajectories of which the absolute value of the acceleration is not greater than a predetermined threshold into the classes.

6. A computer program for generating a reference trajectory, the computer program causing a computer to execute the method of claim 4 or 5 when the computer program is run on the computer.

## Patentansprüche

1. Referenztrajektorienerzeugungseinrichtung (3) mit:
einer Klassifizierungseinheit (41), die eine Vielzahl von Trajektorien einer Bewegung zumindest eines Fahrzeugs durch einen vorbestimmten Abschnitt einer Straße durch Clustern der Trajektorien in dem vorbestimmten Abschnitt in eine Vielzahl von Klassen einteilt,
einer Auswahleinheit (42), die eine Klasse aus den Klassen auswählt, die die meisten Trajektorien enthält, und
einer Referenztrajektorienerzeugungseinheit (43), die eine Referenztrajektorie, die als eine Referenz in dem vorbestimmten Abschnitt dient, durch Mittelung von individuellen Trajektorien erzeugt, die in der aus den Klassen ausgewählten Klasse enthalten sind,
**dadurch gekennzeichnet, dass**
die Klassifizierungseinheit (41) aus der Vielzahl von Trajektorien Trajektorien in die Klassen einteilt, die einen Sperrbereich nicht durchlaufen, in den ein Eintritt des zumindest einen Fahrzeugs verboten ist.

2. Referenztrajektorienerzeugungseinrichtung (3) nach Anspruch 1, wobei jede der Vielzahl von Trajektorien Informationen enthält, die eine Beschleunigung angeben, mit der das Fahrzeug auf der Trajektorie beaufschlagt ist, und die Klassifizierungseinheit (41) unter der Vielzahl von Trajektorien Trajektorien, deren Absolutwert der Beschleunigung nicht größer als ein vorbestimmter Schwellenwert ist, in die Klassen einteilt.

3. Referenztrajektorienerzeugungseinrichtung nach Anspruch 1 oder 2, ferner mit einer Speichereinrichtung (32), die Karteninformationen speichert, die Informationen enthalten, die eine Straßenstruktur in dem vorbestimmten Abschnitt angeben, wobei
die Klassifizierungseinheit (41) bei dem Clustern Daten verwendet, die von der Straßenstruktur in dem vorbestimmten Abschnitt abhängig sind, die in den Karteninformationen als Daten dargestellt werden, die jede der Vielzahl von Trajektorien darstellen.

4. Verfahren zum Erzeugen einer Referenztrajektorie, mit:
Einteilen (S103) einer Vielzahl von Trajektorien einer Bewegung zumindest eines Fahrzeugs durch einen vorbestimmten Abschnitt einer Straße in eine Vielzahl von Klassen durch Clustern der Trajektorien in dem vorbestimmten Abschnitt,
Auswählen (S104) einer Klasse aus den Klassen, die die meisten Trajektorien enthält, und
Erzeugen (S105) einer Referenztrajektorie, die als eine Referenz in dem vorbestimmten Abschnitt dient, durch Mittelung von individuellen Trajektorien, die in der aus den Klassen ausgewählten Klasse enthalten sind,
**dadurch gekennzeichnet, dass**
die Klassifizierungseinheit (41) unter der Vielzahl von Trajektorien Trajektorien in die Klassen einteilt, die einen Sperrbereich nicht durchlaufen, in den ein Eintritt des zumindest einen Fahrzeugs verboten ist.

5. Verfahren zum Erzeugen einer Referenztrajektorie nach Anspruch 4, wobei
jede der Vielzahl von Trajektorien Informationen enthält, die eine Beschleunigung angeben, mit der das Fahrzeug auf der Trajektorie beaufschlagt ist, und die Klassifizierungseinheit (41) aus der Vielzahl von Trajektorien Trajektorien in die Klassen einteilt, deren Absolutwert der Beschleunigung nicht größer als ein vorbestimmter Schwellenwert ist.

6. Computerprogramm zum Erzeugen einer Referenztrajektorie, wobei das Computerprogramm einen Computer zum Ausführen des Verfahrens nach Anspruch 4 oder 5 veranlasst, wenn das Computerprogramm auf dem Computer abläuft.

## Revendications

1. Dispositif de génération de trajectoire de référence (3) comprenant :
une unité de classification (41) qui classe une pluralité de trajectoires de déplacement d'au moins un véhicule à travers une section prédéterminée d'une route en une pluralité de classes par regroupement des trajectoires dans la section prédéterminée ;
une unité de sélection (42) qui sélectionne une classe parmi les classes qui comporte le plus de trajectoires ; et
une unité de génération de trajectoire de référence (43) qui génère une trajectoire de référence servant comme une référence dans la section prédéterminée en faisant la moyenne de trajectoires individuelles comportées dans la classe sélectionnée parmi les classes,
**caractérisé en ce que**
parmi la pluralité de trajectoires, l'unité de classification (41) classe, dans les classes, des trajectoires qui ne passent pas par une zone interdite dans laquelle l'entrée du au moins un véhicule est interdite.

2. Dispositif de génération de trajectoire de référence (3) de la revendication 1, comprenant en outre que
chacune de la pluralité de trajectoires comporte des informations indiquant l'accélération appliquée au véhicule sur la trajectoire, et parmi la pluralité de trajectoires, l'unité de classification (41) classe dans les classes des trajectoires dont la valeur absolue de l'accélération n'est pas supérieure à un seuil prédéterminé.

3. Dispositif de génération de trajectoire de référence selon la revendication 1 ou 2, comprenant en outre une unité de stockage (32) qui stocke des informations cartographiques comportant des informations indiquant la structure de la route dans la section prédéterminée, dans lequel
dans le regroupement, l'unité de classification (41) utilise des données en fonction de la structure de la route dans la section prédéterminée représentée dans les informations cartographiques comme données représentant chacune de la pluralité de trajectoires.

4. Méthode pour générer une trajectoire de référence, comprenant :
classification (S103) d'une pluralité de trajectoires de déplacement d'au moins un véhicule à travers une section prédéterminée d'une route en une pluralité de classes par regroupement des trajectoires dans la section prédéterminée ;
sélection (S104) d'une classe parmi les classes, qui comporte le plus de trajectoires ; et
génération (S105) d'une trajectoire de référence servant comme une référence dans la section prédéterminée en faisant la moyenne de trajectoires individuelles comportées dans la classe sélectionnée parmi les classes,
**caractérisé en ce que**
parmi la pluralité de trajectoires, l'unité de classification (41) classe, dans les classes, des trajectoires qui ne passent pas par une zone interdite dans laquelle l'entrée du au moins un véhicule est interdite.

5. Méthode pour générer une trajectoire de référence de la revendication 4, comprenant en outre que
chacune de la pluralité de trajectoires comporte des informations indiquant l'accélération appliquée au véhicule sur la trajectoire, et parmi la pluralité de trajectoires, l'unité de classification (41) classe dans les classes des trajectoires dont la valeur absolue de l'accélération n'est pas supérieure à un seuil prédéterminé.

6. Programme d'ordinateur pour générer une trajectoire de référence, le programme d'ordinateur amenant un ordinateur à effectuer la méthode de la revendication 4 ou 5 lorsque le programme d'ordinateur est exécuté sur l'ordinateur.
